# EUROPÄISCHE PATENTSCHRIFT

(11) **EP 0 480 874 B1**
(45) Veröffentlichungstag und Bekanntmachung des Hinweises auf die Patenterteilung: **25.01.1995**
(21) Anmeldenummer: 91810764.0
(22) Anmeldetag: 27.09.1991
(51) Int. Cl.: B01D 46/54, B01D 46/12

(54) **Filter zur Teilchenabscheidung**
Filter for particle separation
Filtre pour la séparation de particules

(30) Priorität: 04.10.1990 DE 4031441
(43) Veröffentlichungstag der Anmeldung: 15.04.1992
(73) Patentinhaber: REFIL GmbH, D-63674 Altenstadt (DE)
(72) Erfinder: Esch, Hans W., W-6464 Linsengericht 1 (DE)
(74) Vertreter: Bosshard, Ernst

(56) Entgegenhaltungen:
- EP-A- 0 317 674
- WO-A-89/03720
- FR-A- 2 446 121
- US-A- 4 636 232

## Beschreibung

Die Erfindung bezieht sich auf einen Filter zur Teilchenabscheidung mit mehreren schichtweise angeordneten Rahmen, zwischen denen sich flächenförmige Filtermedien befinden, die Rahmen wechselseitig gegenüberliegende Einström- und Ausström-Oeffnungen aufweisen und mit mehreren im Rahmen im Abstand voneinander in Strömungsrichtung verlaufende Stützstreben zur Abstützung der jeweiligen Filtermedien, wobei die Rahmen Dichtflächen aufweisen, zwischen denen Lagen von Filtermedien durch Flächenpressung festklemmbar sind.

Filter werden für die verschiedensten Zwecke verwendet, beispielsweise zum Abscheiden von Teilchen aus Gasen oder Flüssigkeiten. Bei hohen Anforderungen an die Filterwirkung ergeben sich Abdichtungsprobleme zur klaren Trennung des zugeführten, verunreinigten und des abgeführten, gereinigten Mediums. Man hat sich bei an sich bekannten Filtern dadurch beholfen, dass das Filterpaket selbst zusammen mit dem Rahmen oder Gehäuse dicht vergossen wurde. Dies hat indessen den Nachteil, dass solche Filter zur Regenerierung nicht mehr zerlegt werden können. Derartige mit Filtrierrückständen gesättigte Filter müssen als Ganzes entsorgt werden, wobei je nach ausgefiltertem Schadstoff ein relativ grosses Sondermüllvolumen anfällt.

Aus der US-A-4636232 ist ein Luftfilter bekannt geworden, bei dem einzelne Rahmen jeweils wechselseitig übereinander gestapelt werden und dazwischen eine Filtermatte angeordnet wurde. Die Rahmen sind in Strömungsrichtung mit Oeffnungen für die Luft versehen, sodass die auf der einen Seite des Rahmens eintretende Luft nach dem Durchgang durch die Filtermatte über den benachbarten Rahmen auf der anderen Seite austreten konnte. Die Fixierung der Filtermatten erfolgt durch schmale Stege je innerhalb eines hochstehenden Randes. Die Rahmen werden durch in Schlitze eingreifende Zungen relativ zueinander fixiert. Da ein solcher Verbund nicht dicht sein kann, müssen derartige Filter von einer Schrumpffolie umgeben werden, wobei diese Schrumpffolie zugleich die Rahmen verspannt. Nachteilig ist dabei, dass die Dichtigkeit an den von der Schrumpffolie nicht bedeckten Einström- und Ausströmseiten unbefriedigend ist, namentlich weil hier kein genügender Anpressdruck zwischen diesen Rahmenseiten und den Folienmatten erreichbar ist. Zudem ist der Grad der Verspannung über eine Schrumpffolie nicht definierbar, nicht einstellbar und auf Grund des Kriechverhaltens der Folie nicht konstant. Eine zu grosse Vorspannung kann zur Beschädigung der Filtermatte führen, was namentlich bei Verwendung von Glasvliesfiltermedien zu Glasbruch führt und eine zu kleine Vorspannung zusätzliche Undichtheiten ergibt. Eine Reinigung des Filters mittels Druckluft oder Druckflüssigkeit im Gegenstrom ist praktisch unmöglich, da die Schrumpffolie auf den stützstrebenseitig offenen Flächen die Schlauchfolie aufblähen und zum Platzen bringen würde. Auch eine Regenerierung durch Auswechseln der Filtermatten ist sehr umständlich, da die Filtermatten zwischen den hochstehenden seitlichen Rändern gehalten sind und bei vertikaler Lage und gelockerten Rahmen nicht unter der Schwerkraft herausfallen. Ein Wechsel der Filtermatten wäre somit nur möglich durch vollständiges Trennen der einzelnen Rahmen voneinander, was wegen den bruchgefährdeten Zungen fragwürdig ist.

Aus dem EP-A-0317674 ist ferner ein Filter bekannt, bei dem die Filtermatte mäanderförmig zusammenhängend um übereinander geschichtete Rahmen geführt ist. Die Rahmenenden sind hier durch eine Vergussmasse permanent dicht miteinander und mit dem Aussenrahmen verbunden. Somit ist kein Wechsel der Filtermatte möglich, wodurch ein solcher Filter nur als Ganzes entsorgt werden kann. Da der eine Rand, um den das Filtermedium geschlungen wird, gerundet ist, ergibt sich nur eine bezüglich Dichtigkeit unbefriedigende Linienberührung des Filtermediums mit dem Gegenstück.

Aus dem Dokument FR-A-2446121 geht ein zylindrischer Filter hervor, in dessen Zentrum sich eine Spannschraube befindet, mit der das Filterpaket axial zusammengepresst werden kann. Die einzelnen ringförmigen Filterblätter können nur durch vollständige Zerlegung der rahmenartigen Zwischenlagen ausgewechselt werden.

Mit der Erfindung soll die Aufgabe gelöst werden, einen Filter zu schaffen, der einen einfachen Aufbau hat, die Verwendung untereinander weitgehend gleicher, nach einer Regenerierung wiederverwendbarer Teile ermöglicht, der eine hohe Dichtigkeit gewährleistet und bei dem die Filtermedien leicht auswechselbar sind.

Diese Aufgabe wird erfindungsgemäss dadurch gelöst, dass die Filtermedien voneinander getrennt zwischen benachbarte Rahmen eingelegt und zwischen diesen durch allseitig vollständig plane Dichtflächen gehalten sind, das Filter-Rahmenpaket durch an beiden Enden angeordnete Endplatten mittels lösbarer Spannorgane zusammengepresst ist und die Spannorgane seitlich angeordnete Befestigungslappen der Rahmen durchdringen, welche ausserhalb der Fläche der Filtermedien angeordnet sind, derart, dass die Filtermedien nach dem Lösen der Spannorgane bei vertikaler Filterlage frei nach unten fallen.

Da die ebenen Filtermedien je zwischen planen Dichtflächen - also ohne hochstehenden Rand - liegen und zwischen diesen Dichtflächen mit einer vorbestimmbaren Spannkraft festgehalten werden, wird eine hohe Dichtwirkung erreicht. Durch Lösen der Spannorgane lassen sich die Rahmen - auf den Spannstangen verbleibend - voneinander distanzieren, wodurch die Filtermedien frei werden und in einfacher Weise ausgewechselt werden können. In der Praxis kann dies dadurch erfolgen, dass der Filter in vertikaler Lage über einen Behälter angeordnet oder aufgehängt wird. Nach dem Lösen der Spannschrauben od.dgl. können dann die Filtermedien samt den sich auf diesen angesammelten Filterrückständen direkt in den darunter liegenden Behälter fallen. Da die Spannorgane ausserhalb der Filterfläche angeordnet sind, werden die Filtermedien nicht perforiert oder sonstwie geschwächt.

Da die Befestigungslappen seitlich der quadratischen oder rechteckigen Rahmen angeordnet sind, behindern die Spannorgane den freien Durchgang zum einfachen Auswechseln der Filterelemente nicht.

Eine formstabile und strömungstechnisch zweckmässige Ausgestaltung der Dichtflächen auf der Ein- und Ausströmseite ist durch die Anordnung von zwei flachen Metallschienen möglich, welche die Ein- bzw. Ausström-Oeffnungen begrenzen. Die Stützstreben liegen dabei zwischen diesen beiden Metallschienen und begrenzen durch ihre distanzbolzenartigen Enden den Abstand zwischen diesen Metallschienen. Dadurch wird der Querschnitt der Ein- und Ausström-Oeffnungen nur minimal reduziert. Die Stützstreben, auf denen die Filtermedien aufliegen, werden vorzugsweise am geschlossenen Rahmenende zu einem gemeinsamen Verbindungsstab vereinigt, was eine besonders rationelle Herstellung z.B. im Kunststoff-Spritzverfahren ermöglicht. Damit das Filtermedium zwischen den Stützstreben benachbarter Rahmen kein Spiel hat und dadurch namentlich bei einer Gegenstrom-Regenerierung das Filtermedium gut gestützt bleibt, ist die Höhe der Stützstreben nur wenig geringer als je der Abstand der Dichtflächen an beiden Enden der Stützstreben.

Eine zweckmässige Ausgestaltung der Stützstreben liegt in einem Verhältnis bei dem ihre Länge das 10- bis 20-fache, vorzugsweise etwa das 12-fache beträgt, was eine gute Stützwirkung für das Filtermedium und eine geringe Durchhangsneigung dieses Filtermediums sowie eine ausreichende Steifigkeit der Stützstreben in Längsrichtung ergibt.

Als Filtermedium können je nach dem verlangten Reinheitsgrad unterschiedliche Materialien, wie z.B. Filtervliese oder Filterpapiere verwendet werden. Als zweckmässig hat sich für hohe Abscheidegrade für Schwebstoff-Filter die Verwendung von Filtermedien aus einem Glasfaservlies erwiesen, welche bei automatischer Abreinigung besonders lange Standzeiten ergeben.

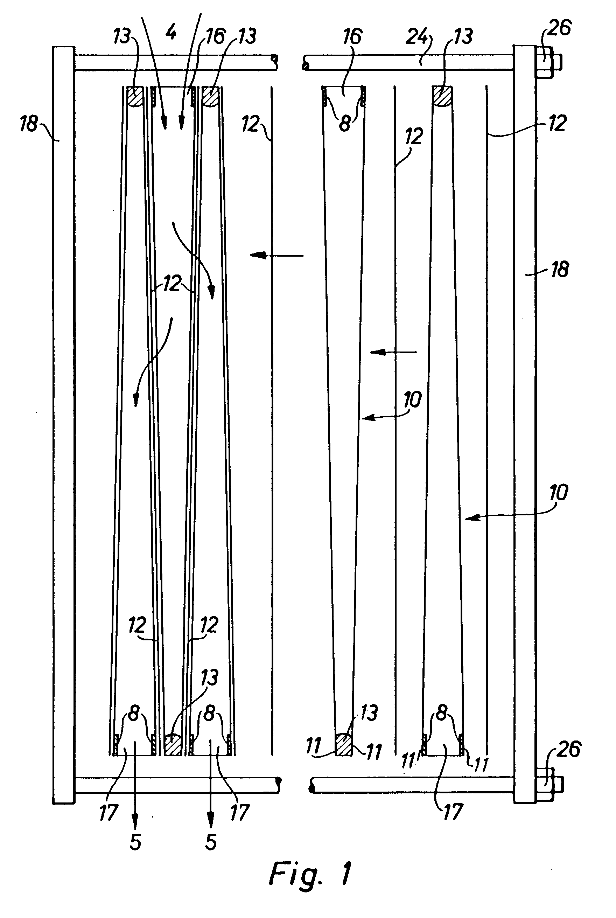

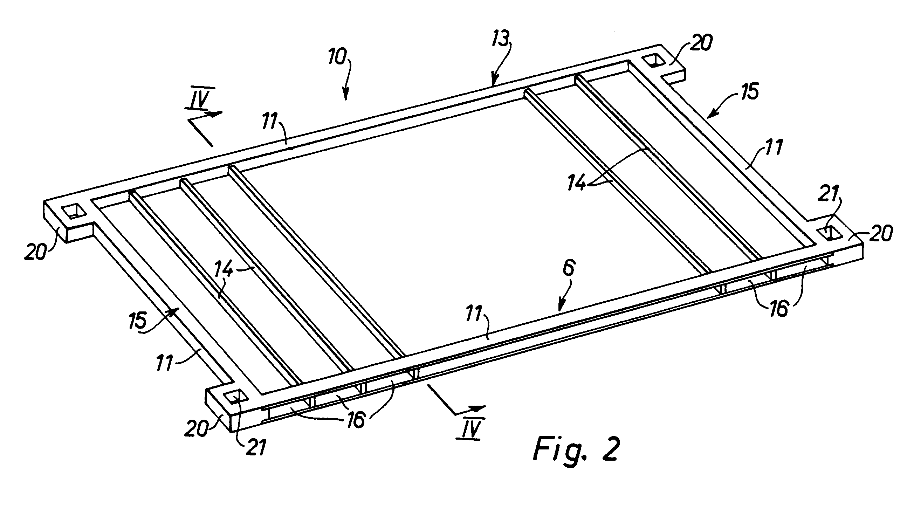

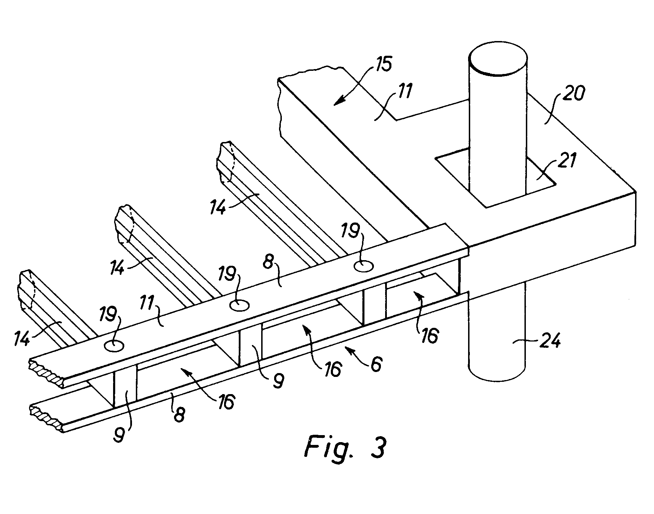

In der Zeichnung sind Ausführungsbeispiele des Erfindungsgegenstandes schematisch dargestellt und werden nachstehend erläutert. Es zeigen :
- Fig. 1: einen Schnitt durch einen Filter in teilweise auseinandergezogener Darstellung
- Fig. 2: eine perspektivische Darstellung eines einzelnen Rahmens
- Fig. 3: eine perspektivische Darstellung des Eckbereiches eines Rahmens
- Fig. 4: einen Schnitt nach der Linie IV-IV in Fig. 2
Filter gemäss Fig. 1 enthalten mehrere zu einem Paket übereinander geschichtete Rahmen 10, zwischen denen je ein flächenartiges, ebenes Filtermedium 12 angeordnet wird. Die untereinander gleich ausgebildeten Rahmen 10 werden wechselseitig angeordnet. Zur Teilchenabscheidung tritt das gasförmige oder flüssige, verunreinigte Durchflussmedium auf der Einströmseite 4 durch Einströmöffnungen 16 je eines Rahmens 10 ein und verlässt den Filter gereinigt auf der Ausströmseite 5 nach dem Durchdringen des Filtermediums 12 durch Ausströmöffnungen 17 beachbarter Rahmen 10.
Die Ausbildung der einzelnen Rahmen 10 geht aus den Fig. 2 und 3 hervor. Jeder rechteckige oder quadradische Rahmen 10 enthält zwei zueinander parallele Längsrahmenteile 6 und 13 und zwei zu diesen rechtwinklig verlaufenden Querrahmenteile 15, welche zusammen einen rechteckigen Raum begrenzen. In diesem Raum befindet sich eine Mehrzahl von untereinander und zu den Querrahmenteilen 15 parallelen Stützstreben 14, die im Abstand zueinander angeordnet sind. Auf der Aussenseite der Querrahmenteile 15 befinden sich vier Befestigungslappen 20, die je mit einer Durchgangsöffnung 21 für Spannbolzen 24 versehen sind. Der Längsrahmenteil 6 hat eine grössere Höhe als der Längsrahmenteil 13. Die Dicke der Querrahmenteile 15 und der Stützstreben 14 nimmt vom Längsrahmenteil 6 ausgehend in Richtung gegen den Längsrahmenteil 13 hin kontinuierlich ab. Durch die wechselseitige Anordnung der Rahmen 10 haben jeweils zwei Rahmen 10 zusammen die gleiche Höhe.

Die Längsrahmenteile 6 enthalten je zwei voneinander distanzierte Metallschienen 8 zwischen die die Enden 9 der Stützstreben 14 hineinragen. Die Befestigung zwischen den Stützstreben 14 und den Metallschienen 8 erfolgt durch in Bohrungen 19 oder mindestens Vertiefungen der beiden Metallschienen 8 hineinragende Zapfen, wie dies aus Fig. 3 hervorgeht.
Die Stützstreben 14 bilden zusammen mit dem Längsrahmenteil 13, den Querrahmenteilen 15 und den Befestigungslappen 20 ein einziges Stück, vorzugsweise aus Kunststoff. Die Oeffnungen zwischen den beiden Metallschienen 8 und den Stützstreben 14 bilden die Einström- bzw. Ausströmöffnungen 16,17 für das Durchflussmedium, insbesondere Luft oder eine Flüssigkeit. In Fig. 2 ist nur ein Teil der Stützstreben 14 und der Ein- bzw. Ausströmöffnungen 16,17 dargestellt; selbstverständlich ist der ganze Raum zwischen den Längs- und Querrahmenteilen 6,13,15 mit in gleichmässigen Abständen angeordneten Stützstreben 14 und Einström- bzw. Ausströmöffnungen 16,17 versehen.

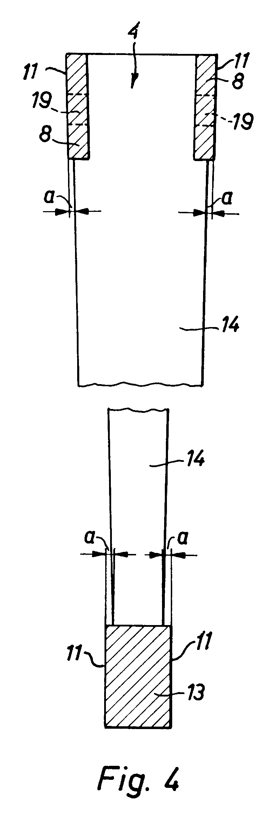

Die Aussenseiten der beiden Metallschienen 8 sowie der Querrahmenteile 13,15 bilden je plane, flächenartige Dichtflächen 11, die in einer gemeinsamen Ebene liegen, gegen welche die Filtermedien 12 satt anliegen. Im zusammengebauten Zustand werden die Filtermedien unter Flächenpressung dicht geklemmt. Die einzelnen, untereinander nicht zusammenhängenden Lagen der Filtermedien 12 werden beidseitig von den sich direkt gegenüberliegenden Stützstreben 14 gestützt. Gegenüber den Dichtflächen 11 sind die Stützstreben 14 beidseitig je um einen geringen Abstand a zurückversetzt, der bei einem bevorzugten Ausführungsbeispiel 3-8, vorzugsweise etwa 5 Hundertstel Millimeter beträgt, wie dies aus Fig. 4 hervorgeht. Dieser Abstand a kann in Abhängigkeit des verwendeten Filtermediums auch eine angepasste unterschiedliche Grösse haben.

Um eine gute Stützfunktion der Stützstreben 14 für das Filtermedium 12 auch bei einer allfälligen Abreinigung mit erhöhtem Gegendruck sicherzustellen ist es zweckmässig, dass die Länge der Stützstreben 14 das 10-20 fache, vorzugsweise etwa das 12-fache ihres gegenseitigen Abstandes haben.

Eine Mehrzahl solcher wechselweise übereinander geschichteter Rahmen 10, je unter Zwischenlage eines Filtermediums 12 werden durch lösbare Spannorgane dicht zusammengepresst. Dies erfolgt durch zwei Endplatten 18, die durch mehrere, insbesondere vier Spannbolzen 24 mittels Gewindemuttern 26 zusammengeklemmt werden. Um einen möglichst gleichmässigen Pressdruck ausüben zu können, können die beiden vorzugsweise aus Metall bestehenden Endplatten 18 entgegengesetzt zur Zugrichtung der Spannorgane vorgespannt oder möglichst biegesteif ausgebildet werden. Die Spannbolzen 24 durchdringen je die Oeffnungen 21 der Lappen 24 weitgehend spielfrei, sodass die Rahmen genau übereinander liegen.

Die Befestigungslappen 20 und damit die Spannbolzen 24 befinden sich auf der Aussenseite der Querrahmenteile 15. Dadurch kann das Filtermedium 12 - ohne Behinderung durch die Spannorgane - in Richtung parallel zu den Stützstreben 14 in die Rahmen 10 eingelegt oder herausgenommen werden. Zur Auswechslung von gesättigten Filtermedien 12 können Filtermedien 12 nach Lösen der Spannorgane - bei vertikaler Lagedirekt nach unten herausfallen.

Die Rahmen 10 bestehen mit Ausnahme der Metallschienen 8 aus einem möglichst wärme- und chemikalienbeständigen Kunststoff.

Als Ausführungsvariante könnte der Rahmen 10 aus einem einzigen Kunststoff oder Metallstück, insbesondere einer Aluminium-Legierung bestehen.

Als Filtermedium können - je nach gewünschtem Abscheidegradbeispielsweise eine Filtermatte aus einen Papiervlies, Glasfaser-oder Kunststoff-Vlies verwendet werden, die je nach Verwendungszweck physikalisch, chemisch oder biologisch zusätzlich behandelt sein können. Für Schwebstoff-Filter eignen sich als Filtermedium Glasfaservliese. Bei diesen ist es besonders wichtig, dass diese an den Dichtflächen möglichst flächig aufliegen und der Pressdruck sorgfältig dosiert werden kann, um ein Zerdrücken und Brechen der Fasern zu vermeiden.

Filter der beschriebenen Art eignen sich zur Teilchenabscheidung für gasförmige oder flüssige Durchfluss-Medien. Je nach dem verlangten Abscheidungsgrad können unterschiedliche Filtermedien eingesetzt werden, die vorzugsweise als dünne, flache Filtermatten ausgebildet sind. Die gute Stützwirkung der Filtermedien durch die Stützstreben erlaubt auch eine gasförmige oder flüssige Abreinigung im Gegenstrom unter erhöhtem Druck oder durch Saugwirkung.

## Patentansprüche

1. Filter zur Teilchenabscheidung mit mehreren schichtweise angeordneten Rahmen (10), zwischen denen sich flächenförmige Filtermedien (12) befinden, die Rahmen (10) wechselseitig gegenüberliegende Einström- und Ausström-Oeffnungen (16, 17) aufweisen und mit mehreren im Rahmen (10) im Abstand voneinander in Strömungsrichtung verlaufende Stützstreben (14) zur Abstützung der jeweiligen Filtermedien (12), wobei die Rahmen (10) Dichtflächen (11) aufweisen, zwischen denen Lagen von Filtermedien (12) durch Flächenpressung festklemmbar sind, dadurch gekennzeichnet, dass die Filtermedien (12) voneinander getrennt zwischen benachbarte Rahmen (10) eingelegt und zwischen diesen durch allseitig vollständig plane Dichtflächen (11) gehalten sind, das Filter-Rahmenpaket durch an beiden Enden angeordnete Endplatten (18) mittels lösbarer Spannorgane (24,26) zusammengepresst ist und die Spannorgane (24) seitlich angeordnete Befestigungslappen (20) der Rahmen (10) durchdringen, welche ausserhalb der Fläche der Filtermedien (12) angeordnet sind, derart, dass die Filtermedien (12) nach dem Lösen der Spannorgane (24,26) bei vertikaler Filterlage frei nach unten fallen.

2. Filter nach Anspruch 1, dadurch gekennzeichnet, dass die Rahmen (10) - in der Draufsicht - quadratisch oder rechteckig sind und die Befestigungslappen (20) die quadratische oder rechteckige Form überragen.

3. Filter nach einem der Ansprüche 1 oder 2, dadurch gekennzeichnet, dass die Rahmen (10) je auf ihrer Einströmbzw. Ausströmseite (4,5) zwei zueinander parallele, aussen die Dichtflächen (11) bildende, flache Metallschienen (8) aufweisen, zwischen denen sich die einen Enden (9) der Stützstreben (14) befinden.

4. Filter nach einem der Ansprüche 1-3, dadurch gekennzeichnet, dass die zueinander parallelen Stützstreben (14) an ihrem einen Ende untereinander durch einen einstückigen, Dichtflächen (11) bildenden Rahmenteil (13) vereint sind und die Höhe der Stützstreben (14) geringer ist als der über die Aussenseiten der Dichtflächen gemessene Abstand.

5. Filter nach einem der Ansprüche 1-4, dadurch gekennzeichnet, dass die Länge der Stützstreben (14) das 10- bis 20-fache, vorzugsweise etwa das 12-fache ihres gegenseitigen Abstandes beträgt.

6. Filter nach einem der Ansprüche 1-5, dadurch gekennzeichnet, dass das Filtermedium ein flaches, rechteckiges Filtervlies, insbesondere ein Schwebstoff-Filtermedium ist.

7. Filter nach Anspruch 6, dadurch gekennzeichnet, dass das Filtermedium ein Papier-, Glasfaser- oder KunststoffFiltervlies ist.

8. Filter nach einem der Ansprüche 1-7, dadurch gekennzeichnet, dass die Endplatte (18) aus metallischem Werkstoff ist und entgegengesetzt zur Zugrichtung der Spannorgane (24) vorgebogen ist.

9. Filter nach einem der Ansprüche 1-8, dadurch gekennzeichnet, dass die Rahmen (10) je auf ihrer Einström- bzw. Ausströmseite (4,5) eine grössere Höhe als auf ihrer gegenüberliegenden Rahmenseite haben und die Rahmen (10) wechselseitig übereinander liegen und untereinander gleich ausgebildet sind.

## Claims

1. Filter for particle separation with a plurality of frames (10) arranged in layers, between which laminar filter media (12) are located, the frames (10) comprising alternately opposite inlet and outlet openings (16, 17) and with a plurality of support struts (14) extending in the frame (10) at a distance from each other in the flow direction, for supporting the respective filter media (12), the frames (10) comprising sealing surfaces (11), between which layers of filter media (12) can be clamped by surface pressure, characterised in that the filter media (12) are inserted separated from each other between adjacent frames (10) and held between the latter by completely flat sealing surfaces (11) on all sides, the set of filter frames is pressed together by end plates (18) located at both ends, by means of releasable clamping members (24, 26) and the clamping members (24) penetrate laterally located fastening lugs (20) of the frame (10), which are located outside the surface of the filter media (12) so that with the filter in a vertical position, after releasing the clamping members (24, 26), the filter media (12) drop freely downwards.

2. Filter according to Claim 1, characterised in that seen in plan view, the frames (10) are square or rectangular and the fastening lugs (20) project beyond the square or rectangular shape.

3. Filter according to one of Claims 1 or 2, characterised in that respectively on their inlet or outlet side (4, 5), the frames (10) comprise two flat metal rails (8), which are parallel to each other and externally form the sealing surfaces (11), between which rails (8) the one ends (9) of the support struts (14) are located.

4. Filter according to one of Claims 1 to 3, characterised in that the support struts (14) parallel to each other are joined at their one end to each other by a one-piece frame part (13) forming sealing surfaces (11) and the height of the support struts (14) is less than the distance measured over the outsides of the sealing surfaces.

5. Filter according to one of Claims 1 to 4, characterised in that the length of the support struts (14) amounts to 10 to 20 times, preferably approximately 12 times their mutual spacing.

6. Filter according to one of Claims 1 to 5, characterised in that the filter medium is a flat, rectangular filter fleece, in particular a mechanical filter medium.

7. Filter according to Claim 6, characterised in that the filter medium is a paper, glass fibre or synthetic material filter fleece.

8. Filter according to one of Claims 1 to 7, characterised in that the end plate (18) is made of metallic material and is bent forwards in opposition to the pulling direction of the clamping members (24).

9. Filter according to one of Claims 1 to 8, characterised in that on their inlet or outlet side (4, 5), the frames (10) respectively have a greater height than on their opposite frame side and the frames (10) lie alternately one above the other and are constructed to be identical to each other.

## Revendications

1. Filtre pour la séparation de particules comprenant plusieurs cadres (10), disposés en couches et entre lesquels se trouvent des milieux filtrants (12) planiformes, les cadres (10) comportant des ouvertures (16, 17) d'entrée et de sortie opposées alternativement, et ayant plusieurs traverses (14) d'appui s'étendant dans le cadre (10) à distance l'une de l'autre dans la direction d'écoulement et destinées à soutenir les milieux filtrants (12), les cadres (10) comportant des surfaces (11) d'étanchéité entre lesquelles peuvent être bloquées par application d'une pression suivant une surface des couches de milieux filtrants (12), caractérisé en ce que les milieux filtrants (12) sont montés séparément les uns des autres entre des cadres (10) voisins et sont maintenus entre ceux-ci par des surfaces d'étanchéité (11) entièrement planes de tout côté, en ce que le paquet de cadres du filtre est maintenu ensemble par pression par des plateaux (18) d'extrémité prévus aux deux extrémités au moyen d'organes de blocage (24, 26) pouvant être débloqués et les organes de blocage (24) traversent des pattes (20) de fixation du cadre (10) qui sont disposées latéralement et en-dehors de la surface des milieux filtrants (12) de façon que les milieux filtrants (12), après déblocage des organes de blocage (24, 26), tombent librement vers le bas lorsque le filtre est en position verticale.

2. Filtre suivant la revendication 1, caractérisé en ce que les cadres (10) - en vue, en plan - sont carrés ou rectangulaires et les pattes (20) de fixation dépassent de la forme carrée ou rectangulaire.

3. Filtre suivant l'une des revendications 1 ou 2, caractérisé en ce que les cadres (10) comportent sur leurs côtés d'entrée (4) et de sortie (5) deux rails (8) métalliques plats parallèles entre eux et formant à l'extérieur les surfaces (11) d'étanchéité, rails entre lesquels se trouvent les unes des extrémités (9) des traverses (14) d'appui.

4. Filtre suivant l'une des revendications 1 à 3, caractérisé en ce que les traverses (14) d'appui parallèles sont réunies entre elles à l'une de leurs extrémités par une partie de cadre (13) formant une surface d'étanchéité (11) d'un seul tenant et la hauteur des traverses (14) d'appui est plus petite que la distance aux côtés extérieurs de la surface d'étanchéité.

5. Filtre suivant l'une des revendications 1 à 4, caractérisé en ce que la longueur des traverses (14) d'appui représente de 10 à 20 fois, et de préférence environ 12 fois, leur distance mutuelle.

6. Filtre suivant l'une des revendications 1 à 5, caractérisé en ce que le milieu filtrant est un voile filtrant plat rectangulaire, notamment un milieu filtrant en matière en suspension.

7. Filtre suivant la revendication 6, caractérisé en ce que le milieu filtrant est un voile de filtre en papier, en fibre de verre ou en matière plastique.

8. Filtre suivant l'une des revendications 1 à 7, caractérisé en ce que le plateau (18) d'extrémité est en matériau métallique et est précintré en sens inverse de la direction de traction de l'organe de blocage (24).

9. Filtre suivant l'une des revendications 1 à 8, caractérisé en ce que les cadres, du côté de leur entrée (4) ou de leur sortie (5), ont une hauteur plus grande que du côté opposé du cadre et les cadres (10) sont superposés alternativement et constitués de manière identique entre eux.
